# EUROPÄISCHE PATENTSCHRIFT

(11) **EP 3 538 719 B1**
(45) Veröffentlichungstag und Bekanntmachung des Hinweises auf die Patenterteilung: **04.11.2020**
(21) Anmeldenummer: 17780004.2
(22) Anmeldetag: 29.09.2017
(51) Int. Cl.: E04B 1/80, B32B 19/04, B32B 19/02, B32B 5/02, B32B 7/12, B32B 27/10, B32B 27/12, B32B 27/36, B32B 5/26

(54) **VAKUUMISOLATIONSPANEEL**
VACUUM INSULATION PANEL
PANNEAU ISOLANT SOUS VIDE

(30) Priorität: 08.11.2016 DE 202016006810 U
(43) Veröffentlichungstag der Anmeldung: 18.09.2019
(73) Patentinhaber: va-Q-tec AG, 97080 Würzburg (DE)
(72) Erfinder: CAPS, Roland, 63839 Kleinwallstadt (DE); BOCK, Tobias, 97318 Biebelried OT Kaltensondheim (DE); NEMETZ, Ivo, 97082 Würzburg (DE); BINZEN, Janek, 97082 Würzburg (DE)
(74) Vertreter: Hoffmann, Oliver
(86) Internationale Anmeldenummer: PCT/EP2017/025275
(87) Internationale Veröffentlichungsnummer: WO 2018/086752

(56) Entgegenhaltungen:
- EP-A1- 1 164 006
- EP-A1- 1 617 126
- WO-A1-2013/067827
- CN-U- 202 718 250
- DE-A1-102004 028 839
- DE-U1-202014 002 192
- FR-A- 1 344 978
- US-A1- 2007 245 664

## Beschreibung

Die Erfindung betrifft ein Vakuumisolationspaneel mit den Merkmalen des Oberbegriffs von Anspruch 1 sowie eine Umhüllungsfolie für Vakuumisolationspaneele mit den Merkmalen des Oberbegriffs von Anspruch 10.

Vakuumisolationspaneele dienen der leistungsfähigen Isolierung von Kühl- und Gefriergeräten, der Isolierung von Transportbehältern für temperatursensitive Güter, zur nachträglichen Dämmung in der Gebäudesanierung etc.

Ein Vakuumisolationspaneel hat grundsätzlich einen flächigen Kern aus offenporigem Material und eine den Kern an allen Seiten eng, vollständig und gasdicht umschließende Umhüllung. Dadurch ist es möglich, den Raum innerhalb der Umhüllung zu evakuieren und dadurch die Wärmeleitfähigkeit des Vakuumisolationspaneels auf sehr niedrige Werte zu bringen.

Bekannt ist ein Vakuumisolationspaneel (DE 10 2010 019 074 A1), bei dem die Umhüllung mindestens eine gasdichte Barriereschicht und innenseitig an der Barriereschicht eine Siegelschicht aufweist. Dieses Vakuumisolationspaneel hat einen flächigen Kern aus einem offenporigen Material, eine erste, an einer ersten Hauptfläche des Kerns großflächig anliegende Barrierefolie mit wenigstens einer dem Kern zugewandten Siegelschicht, eine zweite, den Kern an dessen anderer Hauptfläche umgebende Barrierefolie ebenfalls mit einer Siegelschicht, sowie eine umlaufende Siegelnaht, entlang der die beiden Barrierefolien mit Hilfe der Siegelschichten durch thermisches Verschweißen aneinander gesiegelt sind.

Im Stand der Technik wird erläutert, dass sich für den Kern druckbelastbare Materialien in der Form von Pulverplatten, Pulverschüttungen, offenporigen Schäumen oder Glasfasermaterialien eignen. Insbesondere Dämmkerne aus Pulverplatten oder losem Pulver werden gewöhnlich noch zur Minderung der Staubbildung mit einem luftdurchlässigen Polyestervlies umhüllt, wie sich das beispielsweise aus der DE 100 585 66 A1 ergibt. Damit wird verhindert, dass beim Evakuiervorgang in der Vakuumkammer Staub frei wird und sowohl die Siegelnähte als auch die Vakuumkammer verschmutzen.

Kernplatten aus mikroporösem Kieselsäurepulver weisen eine sehr feine Porenstruktur auf und lassen relativ hohe Gasdrücke zu, ohne dass die Wärmeleitfähigkeit des Restgases eine Rolle spielt. So ist bei diesen mikroporösen Materialien nur ein Vakuum von 1 bis 10 mbar notwendig, um die Wärmeleitfähigkeit auf 0,004 bis 0,005 W/mK zu bringen. Umhüllungen aus speziellen Barrierefolien, die nur eine hauchdünne, aufgedampfte Beschichtung aus Aluminium aufweisen, stellen sicher, dass der Gasdruck im Kernmaterial nur mit etwa einem mbar pro Jahr ansteigt.

Im zuvor ausführlich erläuterten Stand der Technik werden verschiedene Maßnahmen zur Herstellung von Vakuumisolationspaneelen der in Rede stehenden Art beschrieben. Insbesondere wird auch erläutert, dass der flächige Kern nicht nur einteilig, sondern auch mehrteilig aufgebaut sein kann.

Umfangreiche Vorschläge werden für die Ausgestaltung der Umhüllung mit den Barrierefolien gemacht. Typische erreichbare Gasdurchlässigkeiten und Wasserdampfdurchlässigkeiten werden beschrieben und es werden Vorschläge für die Auswahl der Materialien für die Barriereschichten und die Siegelschichten gemacht.

Alle diesbezüglichen Aussagen im Stand der Technik sollen auch für die vorliegende Erfindung in entsprechender Weise Anwendung finden, soweit die nachfolgenden Ausführungen dem nicht ausdrücklich entgegenstehen. Somit wird für die diesbezüglichen Aussagen umfassend auf den Offenbarungsgehalt der DE 10 2010 019 074 A1 verwiesen.

Vakuumisolationspaneele der in Rede stehenden Art haben hervorragende Dämmeigenschaften. Aufgrund der geringen Dicke der Umhüllung sind Vakuumisolationspaneele der in Rede stehenden Art in der Handhabung aber empfindlich. Man muss darauf achten, dass die Umhüllung des Vakuumisolationspaneels nicht beschädigt wird.

Ein detailliertes Beispiel für den Aufbau eines Vakuumisolationspaneels und der den Kern umschließenden Umhüllung eines solchen offenbart die US 4,662,521 A. Hier ist zunächst eine den Kern an allen Seiten umgebene Papierhülle vorgesehen. Erst darauf befindet sich die den Kern umschließende Umhüllung. Diese besteht hier im Beispielfall aus einer inneren Siegelschicht aus Polyethylen mit einer Dicke von 50 µm, einer gasdichten Barriereschicht aus Aluminium in einer Dicke von 9 µm und einer außen auf der Barriereschicht befindlichen Deckschicht aus Polyester in einer Schichtdicke von 12 µm. Die Umhüllung besteht aus zwei flächigen Umhüllungsteilen, die mit ihren Siegelschichten randseitig umlaufend aneinandergelegt und miteinander durch Siegelung unter Druck und Temperatur gasdicht verbunden sind.

Bei dem bekannten Vakuumisolationspaneel, von dem die Erfindung ausgeht (DE 20 2014 002 192 U1), ist eine zusätzliche Schutzmaßnahme für die Barriereschicht der Umhüllung dadurch getroffen, dass an der Außenseite der Barriereschicht oder einer außen auf der Barriereschicht befindlichen Zwischenschicht noch eine Papierschicht angeordnet ist. Die Umhüllung des dortigen Vakuumisolationspaneels hat dort, wo die Barriereschicht bzw. die außen auf der Barriereschicht befindliche Zwischenschicht mit einer Papierschicht kombiniert ist, eine höhere Steifigkeit als zuvor bekannte Umhüllungen. Dadurch ergibt sich eine geringere Empfindlichkeit gegen mechanische Beschädigungen und eine glatte Oberfläche.

Was die vorliegende Erfindung betrifft, so wird umfassend auf die Offenbarung der DE 20 2014 002 192 U1 verwiesen, insbesondere hinsichtlich des Aufbaus der Umhüllung und der möglichen Varianten für die Ausbildung des Kerns.

Aus der WO 2013/067827 A1 ist ein Wärmeschutzpaneel bekannt, das eine Umhüllung aus einem Verbundmaterial zum Schutz vor Flammen und mechanischer Beschädigung aufweist.

In ähnlicher Weise lehrt das Dokument CN 202718250 U, ein feuerfestes Wärmeisolationspaneel, beispielsweise ein Vakuumisolationspaneel, durch eine Verbindung verschiedener Schichten herzustellen, wobei sich an eine Isolationsschicht ober- und unterseitig je eine Flammschutzschicht anschließt.

Die DE 10 2004 028 839 A1 beschreibt ein Folienlaminat, das zur Herstellung eines Vakuumisolationspaneels genutzt werden kann. Hierbei wird die Sperrwirkung einer Dampfsperrschicht durch eine zusätzliche Heißsiegelschicht mit einer Diffusionsbarriereschicht gesteigert.

EP 1 617 126 A1 ist ferner ein Vakuumisolationspaneel mit einer Umhüllung zu entnehmen, die eine Barriereschicht, bestehend aus einer Barrierefolie und einem Aramidharz, aufweist. Eine zusätzliche Schutzschicht aus flammhemmendem Material verleiht dem Paneel eine gewisse Brandresistenz.

Aus EP 1 164 006 A1 ist zudem eine Feuerschutz-Verbundfolie bekannt, bei der eine Polymer-Trägerfolie mit einem flammhemmenden Papier kombiniert wird. Die Verbundfolie kann ferner eine Dampfsperrwirkung aufweisen.

FR 1 344 978 A beschreibt die Verbesserung der Isolationseigenschaften einer thermischen Isolierschicht durch einen dünnen Film aus fluorierten Glimmerplättchen.

Der US 2007/245664 A1 ist schließlich ein metallbeschichtetes Polymer-Isoliermaterial zu entnehmen, das für ein Verfahren zur thermischen Isolierung von Gegenständen oder Gebäuden nutzbar ist. Eine gewisse Brandschutzwirkung wird hier durch Zugabe eines chemischen Flammschutzadditivs erzielt.

Für bestimmte Anwendungsfälle, beispielsweise im Bauwesen oder im Fahrzeugbau, müssen bestimmte Brandschutzanforderungen erfüllt werden. Hohe Brandschutzanforderungen der diesbezüglichen Einsatzgebiete können von den aus dem voranstehend erläuterten Stand der Technik entnehmbaren Vakuumisolationspaneelen nicht erfüllt werden.

Der Lehre liegt daher das Problem zugrunde, ein Vakuumisolationspaneel der in Rede stehenden Art anzugeben, das höhere Brandschutzanforderungen erfüllt als die zuvor beschriebenen bekannten Vakuumisolationspaneele, insbesondere wesentlich höhere Brandschutzanforderungen wie sie beispielsweise in der Automobilindustrie vorliegen.

Die zuvor aufgezeigte Aufgabe ist bei einem Vakuumisolationspaneel mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der Unteransprüche 2 bis 9.

Erfindungsgemäß wird eine wärmeresistente Ausgestaltung der Umhüllung des Vakuumisolationspaneels nicht durch eine Mischung des Materials einer äußeren Schicht mit hitzebeständigen und/oder flammhemmenden Zusätzen realisiert. Vielmehr wird eine eigenständige Schutzschicht aus einem wärmeresistenten Material auf die Barriereschicht oder die auf der Barriereschicht außen befindliche Zwischenschicht aufgebracht. Es handelt sich um eine spezielle Schutzschicht, die in auf ihre Brandschutzwirkung hin optimiert ist.

Für die Umhüllung im Übrigen, außer der erfindungsgemäß hinzutretenden wärmeresistenten Schutzschicht, gelten die Varianten, die im zuvor ausführlich behandelten Stand der Technik angegeben worden sind, so dass auf den Stand der Technik insgesamt verwiesen werden darf.

Vakuumisolationspaneele der in Rede stehenden Art können unterschiedliche Formen haben. Die Regelform ist eine flach-plattenförmige Gestaltung. Vakuumisolationspaneele sind aber auch in anderen Formen, beispielsweise gebogen oder abgewinkelt oder mit unterschiedlichen Dicken in unterschiedlichen Abschnitten bekannt. Die vorliegende Erfindung gilt für alle Formen von Vakuumisolationspaneelen.

Erfindungsgemäß ist die wärmeresistente Schutzschicht in zumindest einem Bereich der Außenfläche des Vakuumisolationspaneels außen aufgebracht. Eine einseitige Aufbringung der Schutzschicht reicht bei einem Vakuumisolationspaneel aus, das in einer bestimmten Orientierung eingebaut wird. Bevorzugt ist es allerdings, dass die komplette Umhüllung mit der wärmeresistenten Schutzschicht versehen ist, so dass es gleichgültig ist, in welcher Orientierung das erfindungsgemäße Vakuumisolationspaneel eingebaut wird.

Die wärmeresistente Schutzschicht kann dadurch auf die Barriereschicht oder die außen auf der Barriereschicht befindliche Zwischenschicht aufgebracht werden, dass der Werkstoff der wärmeresistenten Schutzschicht in situ aufgebracht wird. Bevorzugt ist es allerdings, weil sich dadurch eine bessere Handhabung ergibt, dass die wärmeresistente Schutzschicht als eigenständig handhabbare Folie ausgeführt und mit der Umhüllung im Übrigen durch Klebung dauerhaft verbunden ist.

Klebung im Sinne der Lehre der vorliegenden Erfindung schließt die Verwendung von zusätzlichen Klebemitteln ein, umfasst aber auch die Verwendung von Schmelzklebern, insbesondere Heißschmelzklebern, oder das Verschweißen durch Anschmelzen des Materials der wärmeresistenten Schutzschicht und/oder der Barriereschicht und/oder der Zwischenschicht selbst zum Zwecke der Verbindung miteinander. Auch die Verwendung eines doppelseitigen Klebebandes oder einer klebefähigen Beschichtung fällt unter diese Definition.

Erfindungsgemäß ist nun vorgesehen, dass die wärmeresistente Schutzschicht im Wesentlichen aus mit einem Bindemittel fixierten Glimmerpartikeln, insbesondere auf Basis von Phlogopit oder Muskovit, besteht. Man bezeichnet das auch als "Kunstglimmer" (siehe beispielsweise Schröcke, Weiner "Mineralogie", Walter de Gruyter, 1981, sowie Wikipedia, Stichwort "Kunstglimmer"). Im englischsprachigen Raum bezeichnet man derartige Werkstoffe auf Basis von Glimmer auch als "Mica-Werkstoff" oder "Mica-Folie" (Wikipedia, Stichwort "Mica" sowie Stichworte "Phlogopit" und "Muskovit").

Schichten im Wesentlichen aus mit einem Bindemittel fixierten Glimmerpartikeln werden im Stand der Technik bereits eingesetzt, beispielsweise als Trägermaterial für Heizdrähte oder Flächenheizelemente. Vorliegend wirken sie andersartig, nämlich zum Schutze des von ihnen abgedeckten Werkstoffes, zum Schutze des Vakuumisolationspaneels insgesamt.

Im Sinne einer optimierten Handhabung ist insoweit vorgesehen, dass die Glimmerpartikel der wärmeresistenten Schutzschicht auf einem flächigen Trägermaterial, insbesondere auf einem Glasfasergewebe oder -gewirke oder auf einer Kunststofffolie, insbesondere einer PET-Folie, aufgebracht und fixiert sind. Ein Glasfasergewebe oder -gewirke kommt insbesondere für Phlogopit, eine PET-Folie insbesondere für Muskovit als Trägermaterial in Frage. Auf diese Weise lassen sich die plättchenartigen Glimmerpartikel mit ihrem Bindemittel gut handhaben.

Als Bindemittel kommen primär Kunstharze verschiedener Provenienz oder Kunstkautschuk in Frage, die aus dem Stand der Technik bekannt sind (z.B. Kontaktkleber auf Basis SBR-Styrol-Butadien-Rubber; z.B. Handelsname "GLUKON").

Das flächige Trägermaterial wird von der auf der Barriereschicht befindlichen Zwischenschicht, bei mehrlagiger Ausführung von der auf der äußersten Barriereschicht befindlichen Zwischenschicht, gebildet. Damit wird die Schutzschicht zu einem integralen Bestandteil der Umhüllung selbst.

Grundsätzlich kann man die Glimmerpartikel zunächst auf dem flächigen Trägermaterial lose ablegen. Selbst in dieser Phase einer Herstellung des Vakuumisolationspaneels oder einer Umhüllung für ein Vakuumisolationspaneel kann man aber die Glimmerpartikel bereits durch ein Bindemittel wie es zuvor beschrieben worden ist, vorfixieren.

Weiter ist vorgesehen, dass im Endzustand die Glimmerpartikel auf dem flächigen Trägermaterial durch eine äußere Schutzschicht, insbesondere aus PET, abgedeckt und fixiert sind. Für die Aufbringung dieser Schutzschicht gelten die zuvor erläuterten Varianten.

Trotz der Verwendung der Glimmerpartikel in unmittelbarer Nähe einer Barriereschicht gibt es keine Probleme mit der Standfestigkeit der erfindungsgemäßen Vakuumisolationspaneele, was ein durchaus überraschendes Ergebnis dieser Neuentwicklung ist.

Für die wärmeresistente Schutzschicht im Wesentlichen aus mit einem Bindemittel fixierten Glimmerpartikeln empfehlen sich eine Dicke in der Größenordnung von 20 µm bis 300 µm, vorzugsweise von 50 µm bis 150 µm. Das ist für die typischen Brandschutzanforderungen der vorliegenden Art ausreichend.

In einer Alternative kann man auch vorsehen, dass die wärmeresistente Schutzschicht im Wesentlichen aus einem bei Wärmeeinwirkung aufschäumenden Material besteht. Eine wärmedämmende Schutzschicht dieser Art ist aus dem Stand der Technik auch als Brandschutzfolie bekannt (thermoplastische Polyolefine, gefüllt mit anorganischen Flammschutzmitteln, z.B. Alkalisilikat, z.B. Handelsname "Cello HL Firestop R").

Bei dem zuvor erläuterten Ausführungsbeispiel bedarf es größerer Dicken um eine entsprechende Brandschutzwirkung zu erzielen, nämlich einer Dicke von ca. 0,5 mm bis 5 mm, vorzugsweise von 2 mm bis 3 mm.

Gegenstand der Erfindung ist auch eine Umhüllungsfolie für Vakuumisolationspaneele als solche mit den zuvor beschriebenen Eigenschaften, wozu auf die Ansprüche 10 bis 12 verwiesen werden darf.

Im Folgenden wird die Erfindung anhand einer lediglich Ausführungsbeispiele darstellenden Zeichnung näher erläutert. Im Zuge der Erläuterung der Ausführungsbeispiele werden auch besonders bevorzugte Varianten und Modifikationen der Lehre der Erfindung beschrieben.

In der Zeichnung zeigt
- Fig. 1: in schematischer Darstellung ein erstes Ausführungsbeispiel eines Vakuumisolationspaneels gemäß der Erfindung,
- Fig. 2: in schematischer Darstellung ein zweites Ausführungsbeispiel eines Vakuumisolationspaneels gemäß der Erfindung,
- Fig. 3: in schematischer Darstellung ein drittes, nicht beanspruchtes Ausführungsbeispiel eines Vakuumisolationspaneels,
- Fig. 4: in schematischer Darstellung ein Ausführungsbeispiel einer Umhüllungsfolie für Vakuumisolationspaneele gemäß der Erfindung,
- Fig. 5: in schematischer Darstellung ein weiteres Ausführungsbeispiel einer Umhüllungsfolie für Vakuumisolationspaneele gemäß der Erfindung.

In den Figuren sind die Abmessungen nicht maßstäblich, sondern stark übertrieben, um den Aufbau gut erläutern zu können.

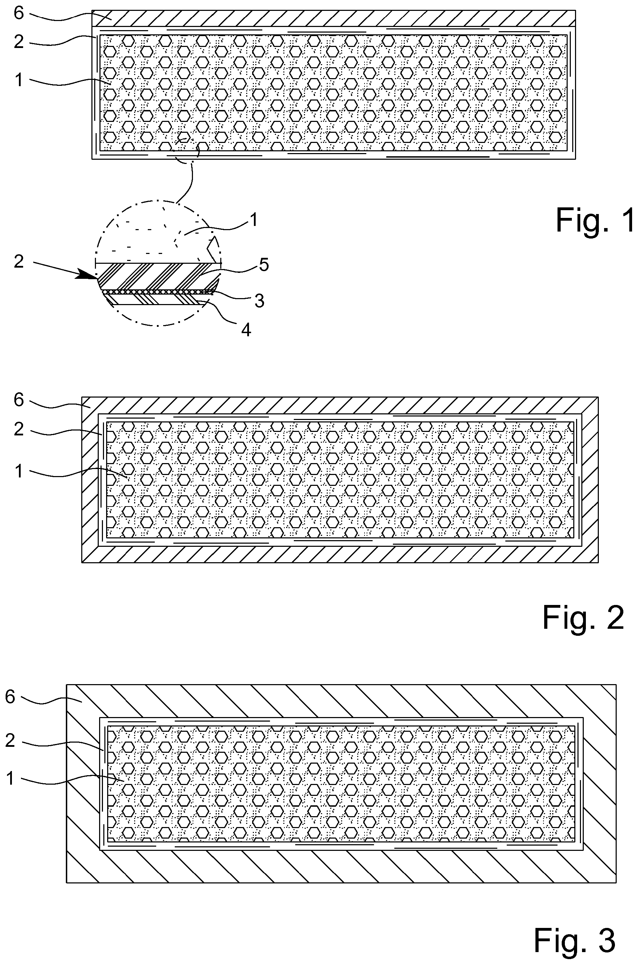

Das in Fig. 1 dargestellte erste Ausführungsbeispiel zeigt ein Vakuumisolationspaneel mit einem Kern 1 aus offenporigem Material und einer den Kern 1 an allen Seiten eng, vollständig und gasdicht umschließenden Umhüllung 2. Wie der Ausschnitt in Fig. 1 erkennen lässt, der insoweit repräsentativ auch für die anderen Figuren ist, hat die Umhüllung 2 mindestens eine gasdichte Barriereschicht 3. Diese besteht im dargestellten und bevorzugten Ausführungsbeispiel aus einer dünnen Metallisierung aus Aluminium, beispielsweise in der aus dem Stand der Technik bekannten Schichtdicke von 5 µm bis 10 µm. Im dargestellten Ausführungsbeispiel sieht man außen auf der Barriereschicht 3 eine Zwischenschicht 4 aus PET in einer Dicke von beispielsweise 15 µm. Im dargestellten Ausführungsbeispiel sieht man ferner innenseitig an der Barriereschicht 3 eine Siegelschicht 5 aus Kunststoff, hier insbesondere aus Polyethylen, in einer Dicke von hier 50 µm.

Wie bereits zum Stand der Technik erläutert worden ist, liegt die Siegelschicht 5 entweder unmittelbar am Kern 1 an oder es befindet sich zwischen der Siegelschicht 5 und dem Kern 1 noch eine weitere Zwischenschicht, vorzugsweise aus einem Kunststoffgewebe oder -gewirke oder aus Papier, so wie oben zum Stand der Technik erwähnt worden ist.

Fig. 1 zeigt eine durchgehende Umhüllung 2, weil es sich um eine schematische Darstellung handelt. Sehr häufig wird man jedoch eine Umhüllung 2 aus zwei flächigen Umhüllungsteilen oder sogar aus mehreren Umhüllungsteilen vorsehen, die mit ihren Siegelschichten randseitig umlaufend aneinandergelegt und miteinander durch Siegelung gasdicht verbunden werden.

Was die Barriereschicht 3 betrifft, so wird auf die DE 20 2014 002 192 U1 verwiesen, in der viele Beispiele für verschiedene Aufbauten der Barriereschicht 3 angegeben werden, die auch im Rahmen der Lehre der Erfindung einsetzbar sind. Entsprechendes gilt für den dort beschriebenen Aufbau der Umhüllung 2 insgesamt wie auch für die Zusammensetzung des Kerns 1, die alle auch im Rahmen der Lehre der vorliegenden Erfindung verwendet werden können.

In Fig. 1 ist nun weiter angedeutet, dass die Umhüllung 2 in zumindest einem Bereich der Außenfläche des Vakuumisolationspaneels außen auf der Barriereschicht 3 oder einer außen auf der Barriereschicht 3 befindlichen Zwischenschicht 4 eine Schutzschicht 6 aus einem wärmeresistenten Material aufweist. In Fig. 1 sieht man diese wärmeresistente Schutzschicht 6 oben auf dem Vakuumisolationspaneel, also auf einer Hauptfläche des Vakuumisolationspaneels.

Bei dem Ausführungsbeispiel von Fig. 2 kann man demgegenüber sehen, dass hier die komplette Umhüllung 2 mit der wärmeresistenten Schutzschicht 6 versehen ist.

Anhand von Fig. 1 kann man gut nachvollziehen, dass es nach bevorzugter Lehre der Erfindung handhabungstechnisch besonders zweckmäßig ist, dass die wärmeresistente Schutzschicht 6 als eigenständig handhabbare Folie ausgeführt und mit der Umhüllung 2 im Übrigen durch Klebung dauerhaft verbunden ist. Insoweit darf hinsichtlich des Begriffes der "Klebung" auf die Erläuterungen hingewiesen werden, die in der Beschreibungseinleitung dazu gemacht worden sind.

Bei den Ausführungsbeispielen der Fig. 1 und 2 ist nun konkret vorgesehen, dass die wärmeresistente Schutzschicht 6 im Wesentlichen aus mit einem Bindemittel fixierten Glimmerpartikeln, insbesondere auf Basis von Phlogopit oder Muskovit, besteht.

Grundsätzlich wäre es denkbar, dass die wärmedämmende Schutzschicht 6 aus Glimmerpartikeln z.B. dadurch hergestellt wird, dass die Glimmerpartikel auf die mit klebefähigem Bindemittel versehene Oberfläche der Umhüllung 2 gleichmäßig aufgestreut werden. Das wäre eine Anbringung der Schutzschicht 6 gewissermaßen in situ.

Die zuvor angesprochene Variante nutzt die auf der Barriereschicht 3 befindliche Zwischenschicht 4 bzw., bei einer mehrlagigen Ausführung, die auf der äußersten Barriereschicht 3 befindliche Zwischenschicht 4 als flächiges Trägermaterial für die darauf gleichmäßig verteilten Glimmerpartikel. Diese können auf dem flächigen Trägermaterial wie zuvor dargestellt vorfixiert sein.

Die auf dem flächigen Trägermaterial befindlichen Glimmerpartikel sind durch eine äußere Deckschicht 6' abgedeckt und fixiert, wobei diese äußere Deckschicht 6' vorzugsweise aus PET besteht.

Zweckmäßig ist auch die im allgemeinen Teil der Beschreibung bereits beschriebene Variante mit einer eigenständig handhabbaren Folie. Insoweit ist in den Ausführungsbeispielen von Fig. 1 und Fig. 2 vorgesehen, dass die Glimmerpartikel der wärmeresistenten Schutzschicht 6 auf einem flächigen Trägermaterial, insbesondere auf einem Glasfasergewebe oder -gewirke oder auf einer Kunststofffolie, insbesondere einer PET-Folie, aufgebracht und fixiert sind. Auf die Erläuterungen hierzu im allgemeinen Teil der Beschreibung darf hingewiesen werden.

Was die bevorzugte Dicke der Schutzschicht 6 bei den Ausführungsbeispielen von Fig. 1 und 2 betrifft, so empfiehlt es sich, dass die Dicke der wärmeresistenten Schutzschicht 6 zwischen 20 µm und 300 µm, vorzugsweise zwischen 50 µm und 150 µm, beträgt.

Fig. 3 zeigt ein anderes, nicht beanspruchtes Ausführungsbeispiel eines Vakuumisolationspaneels, bei dem nämlich vorgesehen ist, dass die wärmeresistente Schutzschicht 6 im Wesentlichen aus einem bei Wärmeeinwirkung aufschäumenden Material besteht. In diesem Fall ist eine bevorzugte Dicke der Schutzschicht 6 deutlich größer als in den Ausführungsbeispielen von Fig. 1 und 2, liegt nämlich bei 0,5 mm bis 5 mm, vorzugsweise bei 2 mm bis 3 mm.

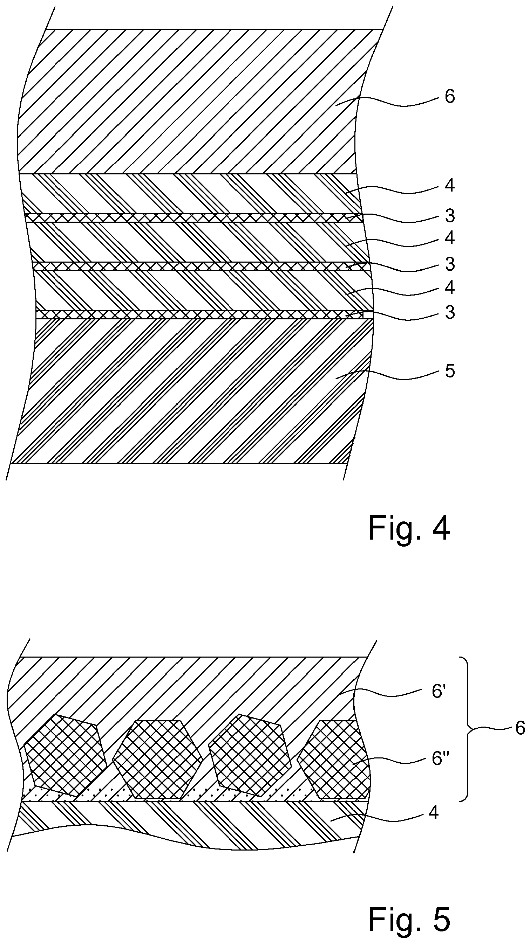

Fig. 4 zeigt eine nochmals vergrößerte weitere Besonderheit der Erfindung. Fig. 4 zeigt schematisch den Schnitt durch eine Umhüllungsfolie für Vakuumisolationspaneele mit außen auf der Barriereschicht 3 oder auf einer außen auf der Barriereschicht 3 befindlichen Zwischenschicht 4 einer Schutzschicht 6 aus einem wärmeresistenten Material. In Fig. 4 sieht man für die als Folie verarbeitbare Umhüllung 2 unten zunächst als Beispiel eine Siegelschicht 5 aus Polyethylen in einer Dicke von ca. 50 µm, darüber die dreilagige Barriereschicht 3 jeweils mit der Kombination Metallisierung auf PET-Zwischenschicht 4, jede Lage etwa in der Dicke von 15 µm, und darauf die Schutzschicht 6 unmittelbar aufgebracht aus mit Bindemittel fixierten Glimmerpartikeln, die Schutzschicht 6 mit einer Dicke von ca. 50 µm. Die gesamte Umhüllungsfolie von Fig. 4 hat dann eine Dicke von annähernd 150 µm und beinhaltet eine Schichtfolge, die zu extrem hohen Brandschutzanforderungen passt. Diese Umhüllungsfolie für Vakuumisolationspaneele kann dann unmittelbar als Umhüllung 2 für Vakuumisolationspaneele verwendet werden.

Das in Fig. 5 dargestellte Ausführungsbeispiel zeigt eine Variante des in Fig. 4 dargestellten Ausführungsbeispiels. Hier ist die obere Schutzschicht 6 aus wärmeresistentem Material gebildet von unmittelbar auf der äußersten Zwischenschicht 4 befindlichen Glimmerpartikeln 6", die hier mit einem Bindemittel vorfixiert sind und einer äußeren Deckschicht 6' aus PET, die diese Glimmerpartikel 6" abdeckt und fixiert. In Fig. 5 ist aus darstellerischen Gründen nur der obere Bereich von der oberen Zwischenschicht 4 an dargestellt.

### Bezugszeichenliste:

- 1: Kern
- 2: Umhüllung
- 3: Barriereschicht
- 4: Zwischenschicht
- 5: Siegelschicht
- 6: Schutzschicht
- 6': Deckschicht
- 6": Glimmerpartikel

## Patentansprüche

1. Vakuumisolationspaneel
mit einem Kern (1) aus offenporigem Material und
mit einer den Kern (1) an allen Seiten eng, vollständig und gasdicht umschließenden Umhüllung (2),
wobei die Umhüllung (2) mindestens eine gasdichte Barriereschicht (3) aufweist,
wobei die Umhüllung (2) in zumindest einem Bereich der Außenfläche des Vakuumisolationspaneels außen auf der Barriereschicht (3) oder auf einer außen auf der Barriereschicht (3) befindlichen Zwischenschicht (4) eine Schutzschicht (6) aus einem wärmeresistenten Material aufweist,
**dadurch gekennzeichnet,**
**dass** die wärmeresistente Schutzschicht (6) im Wesentlichen aus Glimmerpartikeln besteht,
**dass** die Glimmerpartikel der wärmeresistenten Schutzschicht (6) auf einem flächigen Trägermaterial aufgebracht und fixiert sind,
**dass** das flächige Trägermaterial von der auf der Barriereschicht (3) befindlichen Zwischenschicht (4), bei mehrlagiger Ausführung von der auf der äußersten Barriereschicht (3) befindlichen Zwischenschicht (4), gebildet ist, und
**dass** die Glimmerpartikel auf dem flächigen Trägermaterial durch ein Bindemittel vorfixiert und durch eine äußere Deckschicht (6') abgedeckt und fixiert sind.

2. Vakuumisolationspaneel nach Anspruch 1, **dadurch gekennzeichnet,**
**dass** die Umhüllung (2) innenseitig an der Barriereschicht (3) eine Siegelschicht (5) aus Kunststoff aufweist und dass die Siegelschicht (5) unmittelbar am Kern (1) oder an mindestens einer inneren Zwischenschicht, vorzugsweise aus einem Kunststoffgewebe oder -gewirke oder aus Papier, anliegt.

3. Vakuumisolationspaneel nach Anspruch 1 oder 2, **dadurch gekennzeichnet,**
**dass** die Umhüllung (2) aus zwei flächigen Umhüllungsteilen besteht, die mit ihren Siegelschichten (5) randseitig umlaufend aneinandergelegt und miteinander durch Siegelung gasdicht verbunden sind.

4. Vakuumisolationspaneel nach einem der Ansprüche 1 bis 3, **dadurch gekennzeichnet,**
**dass** die komplette Umhüllung (2) mit der wärmeresistenten Schutzschicht (6) versehen ist.

5. Vakuumisolationspaneel nach einem der Ansprüche 1 bis 4, **dadurch gekennzeichnet,**
**dass** die wärmeresistente Schutzschicht (6) als eigenständig handhabbare Folie ausgeführt und mit der Umhüllung (2) im Übrigen durch Klebung dauerhaft verbunden ist.

6. Vakuumisolationspaneel nach einem der Ansprüche 1 bis 5, **dadurch gekennzeichnet,**
**dass** die Glimmerpartikel auf Basis von Phlogopit oder Muskovit gebildet sind.

7. Vakuumisolationspaneel nach einem der Ansprüche 1 bis 6, **dadurch gekennzeichnet,**
**dass** das flächige Trägermaterial ein Glasfasergewebe oder -gewirke oder eine Kunststofffolie, insbesondere eine PET-Folie ist.

8. Vakuumisolationspaneel nach einem der Ansprüche 1 bis 7, **dadurch gekennzeichnet,**
**dass** die äußere Deckschicht (6') aus PET besteht.

9. Vakuumisolationspaneel nach einem der Ansprüche 1 bis 8, **dadurch gekennzeichnet,**
**dass** die Dicke der wärmeresistenten Schutzschicht (6) zwischen 20 µm und 300 µm, vorzugsweise zwischen 50 µm und 150 µm, beträgt.

10. Umhüllungsfolie für Vakuumisolationspaneele mit mindestens einer gasdichten Barriereschicht (3),
wobei die Umhüllungsfolie außen auf der Barriereschicht (3) oder auf einer außen auf der Barriereschicht (3) befindlichen Zwischenschicht (4) eine Schutzschicht (6) aus einem wärmeresistenten Material aufweist,
**dadurch gekennzeichnet,**
**dass** die wärmeresistente Schutzschicht (6) aus Glimmerpartikeln besteht, die unmittelbar auf die Barriereschicht (3) oder die außen auf der Barriereschicht (3) befindliche Zwischenschicht (4) aufgebracht und auf dieser fixiert sind und
**dass** die Glimmerpartikel mit einem Bindemittel fixiert und/oder durch eine äußere Deckschicht (6') abgedeckt und fixiert sind.

11. Umhüllungsfolie nach Anspruch 10, **dadurch gekennzeichnet,**
**dass** die Glimmerpartikel der wärmeresistenten Schutzschicht (6) auf Basis von Phlogopit oder Muskovit gebildet sind.

12. Umhüllungsfolie nach Anspruch 10 oder 11, **dadurch gekennzeichnet,**
**dass** die äußere Deckschicht (6') aus PET besteht.

## Claims

1. Vacuum insulation panel
with a core (1) of open-pore material and
with an enclosure (2) enclosing the core (1) in a close-fitting, complete and gas-tight manner on all sides,
wherein the enclosure (2) comprises at least one gas-tight barrier layer (3),
wherein the enclosure (2) has a protective layer (6) of a heat-resistant material in at least one region of the outer surface of the vacuum insulation panel on the outside of the barrier layer (3) or on an intermediate layer (4) located on the outside of the barrier layer (3),
**characterized in that,**
the heat-resistant protective layer (6) consists substantially of mica particles,
**in that** the mica particles of the heat-resistant protective layer (6) are applied and fixed on a sheet-line carrier material,
**in that** the sheet-line carrier material is formed by the intermediate layer (4) located on the barrier layer (3), in the case of multilayer construction by the intermediate layer (4) located on the outermost barrier layer (3), and
**in that** the mica particles are pre-fixed to the sheet-line carrier material by a binder and are covered and fixed by an outer top layer (6').

2. Vacuum insulation panel of claim 1, **characterized in that**
the enclosure (2) has on the inner side of the barrier layer (3) a sealing layer (5) of plastic and **in that** the sealing layer (5) abuts on the core (1) or on at least one inner intermediate layer, preferably made of a woven or knitted plastic fabric or of paper.

3. Vacuum insulation panel according to claim 1 or 2, **characterized in that**
the enclosure (2) consists of two sheet-like enclosure parts which are placed against one another with their sealing layers (5) running around peripherally, the two sheet-like enclosure parts connected to one another in a sealed, gas-tight configuration.

4. Vacuum insulation panel according to any one of claims 1 to 3, **characterized in that**
the entirety of the enclosure (2) is provided with the heat-resistant protective layer (6).

5. Vacuum insulation panel according to any one of claims 1 to 4, **characterized in that**
the heat-resistant protective layer (6) is designed as a film that can be handled independently and is furthermore permanently connected to the enclosure(2) by adhesive bonding.

6. Vacuum insulation panel according to any one of claims 1 to 5, **characterized in that**
the mica particles are based on phlogopite or muscovite.

7. Vacuum insulation panel according to any one of claims 1 to 6, **characterized in that**
the sheet-line carrier material is a woven or knitted glass fibre fabric or a plastic film, in particular a PET film.

8. Vacuum insulation panel according to any one of claims 1 to 7, **characterized in that**
the outer top layer (6') is made of PET.

9. Vacuum insulation panel according to any one of claims 1 to 8, **characterized in that**
the thickness of the heat-resistant protective layer (6) is between 20 µm and 300 µm, preferably between 50 µm and 150 µm.

10. Enclosure film for vacuum insulation panels with at least one gas-tight barrier layer (3)
wherein the enclosure film has a protective layer (6) of a heat-resistant material on the outside of the barrier layer (3) or on an intermediate layer (4) located on the outside of the barrier layer (3),
**characterized in that,**
the heat-resistant protective layer (6) consists of mica particles which are applied and fixed directly to the barrier layer (3) or the intermediate layer (4) located on the outside of the barrier layer (3), and
**in that** the mica particles are fixed with a binder and/or covered and fixed by an outer top layer (6').

11. Enclosure film according to claim 10, **characterized in that**
the mica particles of the heat-resistant protective layer (6) are formed on the basis of phlogopite or muscovite.

12. Enclosure film according to claim 10 or 11, **characterized in that**
the outer top layer (6') is made of PET.

## Revendications

1. Panneau d'isolation sous vide
avec un noyau (1) de matériau à pores ouverts et
avec une gaine (2) qui entoure étroitement, complètement et de manière étanche au gaz le noyau (1) sur tous les côtés,
dans lequel la gaine (2) comprend au moins une couche barrière étanche aux gaz (3),
dans lequel la gaine (2) comporte une couche de protection (6) en un matériau résistant à la chaleur dans au moins une région de la surface extérieure du panneau d'isolation sous vide sur le côté extérieur de la couche barrière (3) ou sur une couche intermédiaire (4) située sur le côté extérieur de la couche barrière (3), **caractérisé en ce que,**
la couche de protection résistante à la chaleur (6) est essentiellement constituée de particules de mica,
**en ce que** les particules de mica de la couche de protection résistante à la chaleur (6) sont appliquées et fixées sur un matériau support plat,
**en ce que** le matériau support plat est formé par la couche intermédiaire (4) située sur la couche barrière (3), dans le cas d'une construction multicouche par la couche intermédiaire (4) située sur la couche barrière la plus extérieure (3), et
**en ce que** les particules de mica sont préfixées sur le matériau support plat par un liant et sont recouvertes et fixées par une couche de couverture extérieure (6').

2. Panneau d'isolation sous vide de la revendication 1, **caractérisé en ce que** la gaine (2) comporte une couche de scellage (5) en matière plastique sur la face intérieure de la couche barrière (3), et **en ce que** la couche de scellage (5) repose directement sur le noyeau (1) ou sur au moins une couche intermédiaire intérieure, de préférence en tissu ou en tricot de matière plastique ou en papier.

3. Panneau d'isolation sous vide selon la revendication 1 ou 2, **caractérisé en ce que**
la gaine (2) se compose de deux parties de gaine plates qui sont placées l'une contre l'autre avec leurs couches de scellage (5) sur les bords et qui sont reliées entre elles de manière étanche au gaz par scellement.

4. Panneau d'isolation sous vide selon l'une quelconque des revendications 1 à 3, **caractérisé en ce que**
la gaine complète (2) est pourvu de la couche de protection résistante à la chaleur (6).

5. Panneau d'isolation sous vide selon l'une quelconque des revendications 1 à 4, **caractérisé en ce que**
la couche de protection résistante à la chaleur (6) est conçue comme un film qui peut être manipulé indépendamment et qui est par ailleurs relié de manière permanente à la gaine (2) par collage.

6. Panneau d'isolation sous vide selon l'une quelconque des revendications 1 à 5, **caractérisé en ce que**
les particules de mica sont à base de phlogopite ou de muscovite.

7. Panneau d'isolation sous vide selon l'une quelconque des revendications 1 à 6, **caractérisé en ce que**
le matériau de support plat est un tissu ou un tricot de fibres de verre ou un film plastique, en particulier un film PET.

8. Panneau d'isolation sous vide selon l'une quelconque des revendications 1 à 7, **caractérisé en ce que**
la couche de couverture extérieure (6') est en PET.

9. Panneau d'isolation sous vide selon l'une quelconque des revendications 1 à 8, **caractérisé en ce que**
l'épaisseur de la couche protectrice résistante à la chaleur (6) est comprise entre 20 µm et 300 µm, de préférence entre 50 µm et 150 µm.

10. Film d'emballage pour panneaux d'isolation sous vide avec au moins une couche barrière étanche aux gaz (3)
dans lequel le film d'emballage comporte une couche de protection (6) en un matériau résistant à la chaleur sur la face extérieure de la couche barrière (3) ou sur une couche intermédiaire (4) située sur la face extérieure de la couche barrière (3), **caractérisé en ce que,**
la couche de protection résistante à la chateur (6) est constituée de particules de mica qui sont appliquées directement sur la couche barrière (3) ou la couche intermédiaire (4) située à l'extérieur de la couche barrière (3) et sont fixées sur celle-ci, et
**en ce que** les particules de mica sont fixées par un liant et/ou recouvertes et fixées par une couche de couverture extérieure (6').

11. Film d'emballage selon la revendication 10, **caractérisé en ce que**
les particules de mica de la couche protectrice résistante à la chaleur (6) sont formées à base de phlogopite ou de muscovite.

12. Film d'emballage selon la revendication 10 ou 11, **caractérisé en ce que** la couche de couverture extérieure (6') est en PET.
